(19) Europäisches Patentamt
European Patent Office
Office européen des brevets

(11) **EP 4 667 248 A1**

(12) **EUROPEAN PATENT APPLICATION**

(43) Date of publication:
**24.12.2025 Bulletin 2025/52**

(21) Application number: **25181696.3**

(22) Date of filing: **10.06.2025**

(51) International Patent Classification (IPC):
**B60G 17/016** (2006.01)  **B60G 17/08** (2006.01)

(52) Cooperative Patent Classification (CPC):
**B60G 17/0162; B60G 17/08;** B60G 2200/44;
B60G 2200/462; B60G 2200/4622; B60G 2400/41;
B60G 2600/182; B60G 2800/012; B62D 9/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.06.2024 IT 202400014071**

(71) Applicant: **FERRARI S.p.A.**
**41100 Modena (IT)**

(72) Inventors:
• **FAVALLI, Federico**
**41100 MODENA (IT)**
• **CANDREVA, Stefano**
**41100 MODENA (IT)**
• **FERRIGNO, Rocco**
**41100 MODENA (IT)**
• **MINCIGRUCCI, Francesca**
**41100 MODENA (IT)**

(74) Representative: **Studio Torta S.p.A.**
**Via Viotti, 9**
**10121 Torino (IT)**

(54) **MOTOR VEHICLE WITH ACTIVE SUSPENSIONS AND CONTROL METHOD OF THE MOTOR VEHICLE**

(57)     A control method for controlling a motor vehicle (1) with a sprung mass, an unsprung mass comprising a plurality of wheels (3FL, 3FR, 3RL, 3RR), an active suspension assembly (4) for suspending the sprung mass with respect to the unsprung mass and controllable to apply for each of the wheels (3FL, 3FR, 3RL, 3RR) of the motor vehicle (1) a corresponding force; said control method includes a control of the active suspension assembly (4) for applying a first compression force for a first wheel (3FL) of said wheels (3FL, 3FR, 3RL, 3RR), applying a first extension force for a second wheel (3FR) of said wheels (3FL, 3FR, 3RL, 3RR), the second wheel (3FR) being aligned with the first wheel (3FL) according to a pitch axis (Y) of the motor vehicle (1), applying a second extension force for a third wheel (3RL) of said wheels (3FL, 3FR, 3RL, 3RR), the third wheel (3RL) being aligned with the first wheel (3FL) according to a roll axis (X) of the motor vehicle (1), and applying a second compression force for a fourth wheel (3RR) of said wheels (3FL, 3FR, 3RL, 3RR), the fourth wheel (3RR) being aligned with the second wheel (3FR) according to the roll axis (X) and with the third wheel (3RL) according to the pitch axis (Y), wherein the first compression force and the first extension force have the same first modulus, just as the second compression force and the second extension force have the same second modulus and are applied simultaneously to each other and simultaneously to the first compression force and to the first extension force, the first and the second modulus being such as to balance a resultant torque due to the control of the active suspension assembly (4) about the roll axis (X).

FIG. 4

**Description**

CROSS-REFERENCE TO RELATED APPLICATIONS

This patent application claims priority from Italian patent application no. 102024000014071 filed on June 19, 2024, the entire disclosure of which is incorporated herein by reference.

TECHNICAL FIELD

The invention concerns a motor vehicle provided with active suspensions, and a method for controlling the motor vehicle.

PRIOR ART

As known, the body of a motor vehicle is normally sprung relative to the wheels via suspensions. Therefore, the body forms part of what is normally defined as sprung mass of the motor vehicle, while the wheels form part of what is typically defined as unsprung mass of the motor vehicle.

The suspensions usually include a spring and a shock absorber.

The shock absorber has a casing and a stem axially movable relative to the casing. The stem and the casing are fixed respectively to the body and to a suspension arm belonging to the suspensions. The suspension arm, in turn, is normally coupled to one of the wheels.

Inside the casing, the stem carries a piston that cooperates in a fluid-dynamic manner with a fluid contained in the casing, thus damping the relative movements between the stem and the casing.

The suspension arm follows the movement of the wheel with which it is coupled. Therefore, the movements of the wheel due to the contact with the road are transmitted to the suspension arm resulting in a relative movement between the stem and the casing, which is damped by the fluid-dynamic cooperation between the piston and the fluid contained in the casing.

A suspension is called active if it includes in addition a force generation system for actively controlling the movement of the body relative to the arm, namely of the stem relative to the casing, or relative to the wheels.

The system typically includes one or more servo actuators, for example of electric, hydraulic, pneumatic or electrohydraulic type, to move the body relative to the arm or the wheels.

Generally, in the field of motor vehicles, whether they have active suspensions or not, the need for improvements is always and constantly felt, for example in terms of preserving the components from wear, and increasing the effectiveness and efficiency of operation of the same components.

The possible improvements are not clearly limited to those exemplified above, but can concern for example the possibility of carrying out manoeuvres with the motor vehicle via means or modes alternative to those usually employed in the field.

An object of the invention is to meet at least one of the above needs, preferably in a simple repeatable manner.

DESCRIPTION OF THE INVENTION

The object is achieved by a control method and a motor vehicle as defined in the independent claims.

The dependent claims define particular embodiments of the invention.

BRIEF DESCRIPTION OF THE DRAWINGS

Below, an embodiment of the invention is described for a better understanding thereof by way of non-limiting example and with reference to the attached drawings wherein:

- figure 1 is a lateral view of a motor vehicle according to the invention with a schematized representation of an active suspension assembly,
- figure 2 is a simplified conceptual schematic representation of the motor vehicle of figure 1,

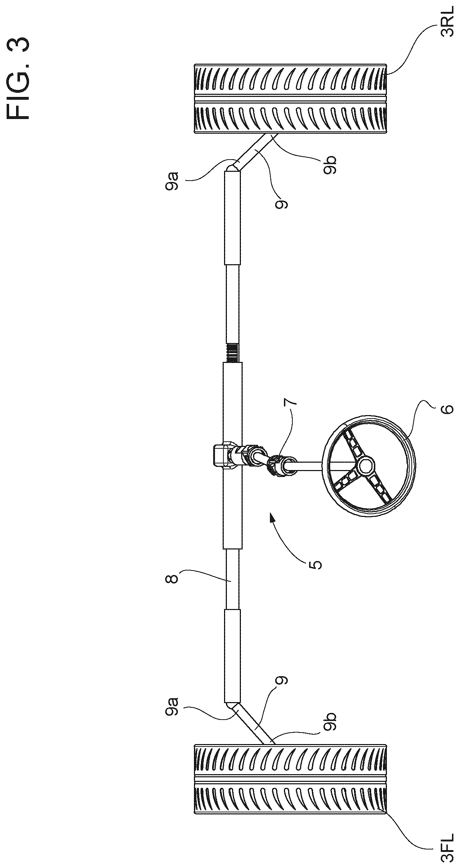

- figure 3 is a plan view of a steering assembly of the motor vehicle,
- figure 4 is a plan diagram of the motor vehicle showing a control logic of the active suspension assembly, and
- figures 5 and 6 are diagrams that show the execution of a steering manoeuvre of the motor vehicle via a control logic of the motor vehicle, and
- figures 7, 8 are graphs showing operational quantities of the motor vehicle in respective operating conditions corresponding to figures 5 and 6 respectively.

EMBODIMENTS OF THE INVENTION

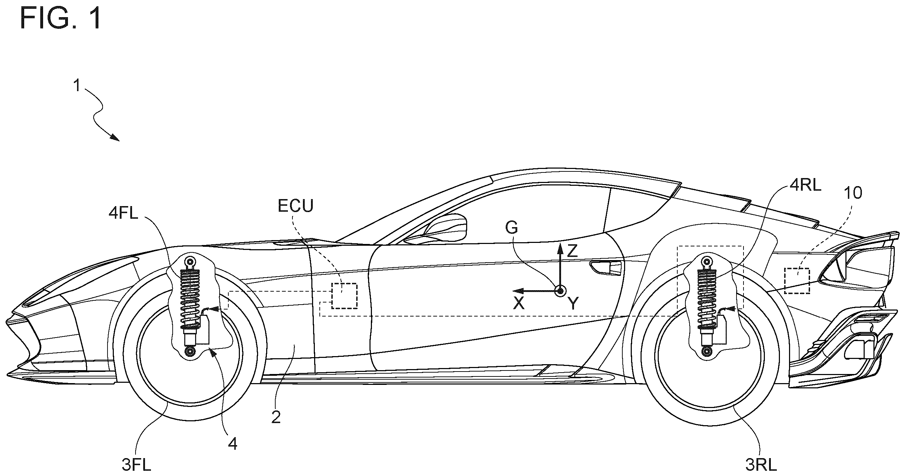

In figure 1, the reference number 1 is used to indicate, overall, a motor vehicle.

Like all motor vehicles, the motor vehicle 1 has a body 2, namely a structural assembly including a chassis and a bodywork.

The body 2 defines or surrounds the passenger compartment of the motor vehicle 1.

Furthermore, the motor vehicle 1 comprises a plurality of wheels, with at least four wheels 3FL, 3FR, 3RL, 3RR, of which in particular the wheels 3FL, 3FR are anterior relative to the wheels 3RL, 3RR according to a normal direction of progress of the motor vehicle 1, coinciding with a roll axis X of the motor vehicle 1.

Both the front wheels 3FL, 3FR and the rear wheels 3RL, 3RR are aligned with each other according to a pitch axis Y of the motor vehicle 1.

The wheels 3FL, 3RL are aligned with each other along the axis X, and likewise the wheels 3FR, 3RR. Therefore, for example, the wheel 3RR is aligned with the wheel 3FR according to the axis X and with the wheel 3RL according to the axis Y.

Each of the wheels 3FL, 3FR, 3RL, 3RR is rotatably mounted around a corresponding wheel axle by a hub carrier or suspension upright, for example of known type and therefore not illustrated.

The pitch axis Y and the roll axis X are two of the three axes defining a reference system, which is integral with the body 2 and further composed of a yaw axis Z. The axes X, Z are orthogonal to each other and orthogonal also relative to the axis Y.

With reference to the conditions of use of the motor vehicle 1, the pitch axis Y is horizontal, while the yaw axis Z has at least one vertical component, namely oriented along a direction of a weight or weight force of the motor vehicle 1, namely along a direction of gravity acceleration. The roll axis X is parallel to a direction along which the motor vehicle 1 extends longitudinally, therefore to a longitudinal direction.

The reference system composed of the axes X, Y, Z can be applied to a centre of mass G of the motor vehicle 1. For clarity, terms such as anterior, posterior, front, rear and similar refer to the centre of mass G in this description and more in particular also to the direction of progress of the motor vehicle 1.

At least one pair out of the pair defined by the wheels 3FR, 3FL and the pair defined by the wheels 3RL, 3RR defines steerable wheels of the motor vehicle 1, which are specifically the wheels 3FR, 3FL.

The motor vehicle 1 comprises a steering assembly 5 operable by a driver of the motor vehicle 1 to steer the steerable wheels, specifically the wheels 3FR, 3FL.

The steering assembly 5 is therefore operable to carry out the steering, namely to steer the steerable wheels. Consequently, the steering can be obtained in response to the operation of the steering assembly 5.

In further detail, the steering assembly 5 comprises an inlet device 6, in this case a steering wheel, operable by the driver to impart a steering request. Furthermore, the steering assembly 5 comprises a conversion assembly 7 configured to convert the steering request imparted by the driver via the inlet device 6 into a coordinated rotation of the steerable wheels around the axis Z, which translates into or corresponds to the setting of a steering angle of the motor vehicle 1 or more generally of the steering of the motor vehicle 1.

The conversion assembly 7 could be purely mechanical, or can include a steer-by-wire type system, without loss of generality.

The steering angle can be defined here as the angle formed around the axis Z between the axis X and a direction orthogonal to the axis Z and to the wheel axle of one of the steerable wheels. The direction orthogonal to the wheel axle of the other of the steerable wheels will form with the axis X a further angle which can be equal to or more preferably different from the steering angle, although corresponding to it according to a unique relation.

The conversion assembly 7 comprises at least a member 8 coupled to the steerable wheels and movable according to the steering request, namely use of the inlet device 6. The member 8 is configured to transmit its movement to the steerable wheels, thus setting the steering angle.

The conversion assembly 7 comprises steering tie rods 9 having respective ends 9a, 9b; the ends 9a are coupled to the member 8, while the ends 9b are respectively coupled to the steerable wheels.

In particular, the member 8 is carried by the body 2 in a translating manner according to the axis Y and extends according to the axis Y between opposite ends, more in particular coupled respectively to the ends 9b.

The conversion assembly 7 is configured so that the member 8 translates according to the axis Y correspondingly to a rotation or more generally a movement of the inlet device 6 (here a steering wheel). For example, the member 8 is coupled to the inlet device 6 via a steering transmission of the conversion assembly 7. Alternatively, the member 8 could be moved by an actuator as a function of a control signal generated in response to the operation of the inlet device 6 and representative of the operation itself.

The motor vehicle 1 comprises at least an engine 10 carried by the body 2 and at least a transmission (not illustrated) connecting or configured to connect the engine 10 to at least a pair of the one defined by the wheels 3FL, 3RF and the one defined by the wheels 3RL, 3RR.

The motor vehicle 1 further comprises a suspension assembly 4, via which the wheels 3FL, 3FR, 3RL, 3RR are coupled to the body 2.

The wheels 3FL, 3FR, 3RL, 3RR form part of an unsprung mass of the motor vehicle 1, hence they are arranged in direct contact with the road; therefore, during the progress of the motor vehicle 1, the wheels 3FL, 3FR, 3RL, 3RR move according to the axis Z according to the characteristics of the road with which they are in contact.

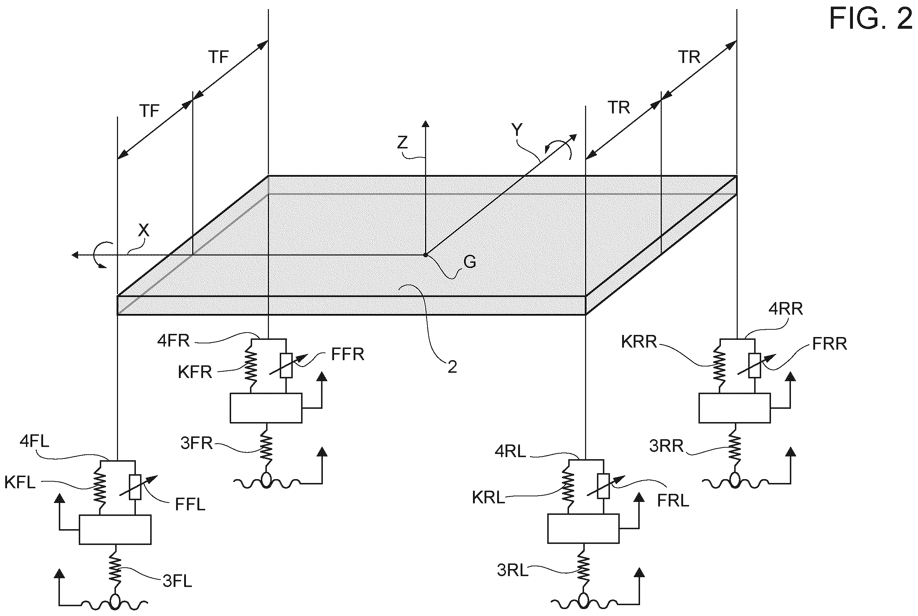

In particular, in the diagram of figure 2, the contact between the road and the wheels 3FL, 3FR, 3RL, 3RR is represented in a simplified manner by springs, since the wheels 3FL, 3FR, 3RL, 3RR are elastically deformable, and deformed by contact with the road, so that their position according to the axis Z with respect to the centre of mass G is variable due to the contact with the road.

The variation of the position of the wheels 3FL, 3FR, 3RL, 3RR according to the axis Z relative to the centre of mass G due to the contact with the road will be henceforth defined as shaking of the wheels 3FL, 3FR, 3RL, 3RR.

The body 2 forms part of a sprung mass of the motor vehicle 1. The suspension assembly 4 is configured to suspend the sprung mass with respect to the unsprung mass.

Thanks to the suspension assembly 4, the body 2 can have a relative movement with respect to the wheels 3FL, 3FR, 3RL, 3RR according to the axis Z.

The suspension assembly 4 is an active assembly, hence it is controllable to exert actuation forces to amplify or reduce the above-mentioned relative movement, namely the movement of each of the wheels 3FL, 3FR, 3RL, 3RR relative to the body 2, or even to generate or impose the movement of each of the wheels 3FL, 3FR, 3RL, 3RR relative to the body 2.

The suspension assembly 4 is of the type with independent wheels, since each of the wheels 3FL, 3FR, 3RL, 3RR can have a respective distinct movement relative to the body 2.

The suspension assembly 4 is controllable to move the sprung mass with respect to the unsprung mass, in particular according to the axis Z.

More precisely, the suspension assembly 4 is controllable to apply for or on each of the wheels 3FL, 3FR, 3RL, 3RR a corresponding force.

In fact, the suspension assembly 4 comprises respective active suspension elements 4FL, 4FR, 4RL, 4RR for the wheels 3FL, 3FR, 3RL, 3RR respectively configured to apply respective forces FFL, FFR, FRL, FRR to the wheels 3FL, 3FR, 3RL, 3RR or between the wheels 3FL, 3FR, 3RL, 3RR and the body 2 to move the corresponding wheels 3FL, 3FR, 3RL, 3RR relative to the body 2 or to the sprung mass.

Each of the active suspension elements 4FL, 4FR, 4RL, 4RR comprises in particular at least an actuator configured to supply an output power and a conversion assembly configured to convert the power supplied by the actuator into the corresponding one of the forces FFL, FFR, FRL, FRR.

Furthermore, preferably, the active suspension elements 4FL, 4FR, 4RL, 4RR can comprise respective springs KFL, KFR, KRL, KRR, each of which comprises two opposite ends respectively coupled to the corresponding one of the wheels 3FL, 3FR, 3RL, 3RR and to the body 2.

In general, alternatives of active suspension elements suitable for moving the sprung mass, namely the body 2, with respect to the unsprung mass, namely one of the wheels 3FL, 3FR, 3RL, 3RR, are known per se and therefore not described in further detail.

Each of the forces FFL, FFR, FRL, FRR can be a compression force for bringing the sprung mass or the body 2 closer to the corresponding one of the wheels 3FL, 3FR, 3RL, 3RR according to the axis Z or an extension force to move the sprung mass or the body 2 away from the corresponding one of the wheels 3FL, 3FR, 3RL, 3RR according to the axis Z.

Conventionally, a positive sign is attributed to the compression force, while a negative sign is attributed to the extension force. However, an extension force and a compression force having the same modulus or an equal modulus are opposed to each other, hence their sum is null.

The motor vehicle 1 comprises a control unit ECU configured to control the suspension assembly 4 during the use of the motor vehicle 1. More precisely, the control unit ECU is configured to control the active suspension elements 4FL, 4FR, 4RL, 4RR, or more generally at least one or more of them, so as to apply the relative forces FFL, FFR, FRL, FRR to or for the wheels 3FL, 3FR, 3RL, 3RR respectively via the active suspension elements 4FL, 4FR, 4RL, 4RR.

The control unit ECU carries out a check or a general control logic wherein:

- it applies a first compression force to or for a first wheel of the wheels 3FL, 3FR, 3RL, 3RR, for example the wheel 3FL, and simultaneously
- applies a first extension force to or for a second wheel of the wheels 3FL, 3FR, 3RL, 3RR aligned with the first wheel according to the axis Y (for example the wheel 3FR if the first wheel is the wheel 3FL).

The first compression force and the first extension force have opposite signs to each other. Furthermore, in particular, but not necessarily, the control logic provides more specifically for the control unit ECU to:

- apply a second extension force to or for a third wheel of the wheels 3FL, 3FR, 3RL, 3RR aligned with the first wheel according to the axis X (for example the wheel 3RL if the first wheel is the wheel 3FL), and simultaneously
- apply a second compression force to or for a fourth wheel of the wheels 3FL, 3FR, 3RL, 3RR aligned with the second wheel according to the axis X and to the third wheel according to the axis Y (for example the wheel 3RR if the first wheel is the wheel 3FL).

The first and the second compression force, like the first and the second extension force, are all applied simultaneously.

Preferably, but not necessarily, the first compression force and the first extension force are applied with the same first modulus, namely they are opposed to each other, so that their sum is null. Preferably and independently, the second compression force and the second extension force are applied with the same second modulus, namely they are opposed to each other, so that their sum is null.

In this case, the control logic is particularly advantageous.

In fact, in this way, the static equilibrium of the forces FFL, FFR, FRL, FRR remains unchanged by the action of the suspension assembly 4 according to the control logic with respect to all the axes X, Y, Z, and in particular with respect to the axis Z, since the sum of the forces FFL, FFR, FRL, FRR applied by the suspension assembly 4 is null.

Therefore, the displacement of the centre of mass G according to the axis Z due to the action of the suspension assembly 4 is null.

In general, the shaking of each of the wheels 3FL, 3FR, 3RL, 3RR is proportional to the respective forces applied by the active suspension elements 4FL, 4FR, 4RL, 4RR.

Therefore, with the particularly advantageous control logic, the shaking of the wheel 3FL is equal and opposite to the shaking of the wheel 3FR, likewise the shaking of the wheel 3RL with respect to that of the wheel 3RR, assuming that the motor vehicle 1 is substantially symmetrical with respect to the plane of the axes X, Z, as normally occurs in all motor vehicles.

Furthermore, the first compression force and the first extension force generate respective equal and opposite torques about the axis Y with respect to the centre of mass G, just as the same occurs for the second compression force and the second extension force.

Therefore, the equilibrium of the torques about the axis Y remains unchanged by the action of the suspension assembly 4 according to the control logic.

Vice versa, the equilibrium of the torques about the axis X can be influenced by the action of the suspension assembly 4.

The sum of the torques about the axis X due to the action of the suspension assembly 4, more precisely due to the forces FFL, FFR, FRL, FRR, will be a function of the first and second modulus, and of a plurality of geometric or constructive parameters of the motor vehicle 1 such as, for example, the arrangement of the wheels 3FL, 3FR, 3RL, 3RR with respect to the centre of mass G, the arrangement of the active suspension elements 4FL, 4FR, 4RL, 4RR, the construction characteristics of the wheels 3FL, 3FR, 3RL, 3RR, and similar.

In particular, the arrangement of the active suspension elements 4FL, 4FR, 4RL, 4RR determines the directions, generally misaligned with the axes X, Y, Z, of the forces FFL, FFR, FRL, FRR. Therefore, the torques produced by the forces FFL, FFR, FRL, FRR about the axis X will be determined by their projections on the axis Z.

The geometric or constructive parameters of the motor vehicle 1 are known a priori, hence they could be, for example, stored in the control unit ECU. Therefore, the values of the first and second modulus that entail the annulment of the sum of the torques about the axis X, namely that balance or annul the resultant torque due to the action of the active suspension assembly 4 about the axis X, are determinable a priori or via a calculation of the control unit ECU.

Therefore, the control unit ECU can comprise or determine or receive the values of the first and second modulus that balance or annul the resultant torque about the axis X due to the action of the active suspension assembly 4.

For example, with the particularly advantageous control logic (shaking and forces equal and opposite between aligned wheels), assuming again that the motor vehicle 1 is substantially symmetrical with respect to the plane of the axes X, Z, the equilibrium of the torques about the axis X could be represented via the following equation:

$$(2FF \cdot TF)/RF - (2FR \cdot TR)/RR = 0$$

where FF and RR are used to indicate the first and the second modulus (considering for example that the first and the second wheel are the wheels 3FL, 3FR, although the relation applies regardless of the specific example); TF indicates the distance of the centre of each of the wheels 3FL, 3FR from the centre of mass G according to the axis Y; TR indicates the distance of the centre of each of the wheels 3RL, 3RR from the centre of mass G according to the axis Y; RF indicates the direction cosine to project the direction of application of each of the forces FFL, FFR on the axis Z; RR indicates the direction cosine to project the direction of application of each of the forces FRL, FRR on the axis Z.

From here, the values of the first and second modulus that balance or annul the sum of the torques about the axis X, namely the resultant torque about the axis X, have a ratio, for example obtainable according to the following equation:

$$FF/FR = TR \cdot RF / TF \cdot RR$$

According to the particularly advantageous control logic, the control unit ECU requires for example, but not necessarily, the first and the second modulus to balance or annul the resultant torque about the axis X due to the action of the active suspension assembly 4 or more precisely the forces FFL, FFR, FRL, FRR exerted by the active suspension elements 4FL, 4FR, 4RL, 4RR.

In particular, the control unit ECU sets the ratio between the first and the second modulus, which for example is the one indicated by the above equation.

In this way, the sprung mass is in a state of static equilibrium. Therefore, the driver does not perceive imbalances in the sprung mass, independently of the manoeuvres performed by the driver with the motor vehicle 1.

In other words, the resultant torque about the axis X due only to the action of the active suspension assembly 4 or more precisely to the forces FFL, FFR, FRL, FRR exerted, in particular directly, by the active suspension elements 4FL, 4FR, 4RL, 4RR, is balanced or annulled, and not, for example, the resultant torque about the axis X due to the action of other forces not exerted by the active suspension elements 4FL, 4FR, 4RL, 4RR or forces external to the motor vehicle 1 to which the latter is subject during movement, for example the centrifugal force or the aerodynamic resistance force.

According to a first particular application of the control logic, the latter is carried out during a steering of the motor vehicle 1, namely when the steering assembly 5 steers the steerable wheels.

Here, the first and the second wheel are the steerable or steered wheels during the steering. Furthermore, the first wheel is innermost relative to the second wheel with respect to a curved steering trajectory.

In fact, the steering entails a curved trajectory of the motor vehicle 1, which has a centre of curvature. The innermost wheel is the one radially nearest the centre of curvature.

In other words, during the steering, the motor vehicle 1 moves towards one of its two sides, for example to the left or right of the motor vehicle 1, with reference to the direction of progress of the motor vehicle 1 (which can also be the reverse direction); the innermost wheel is the one at the side of the motor vehicle 1 towards which the latter moves during the steering.

In this way, according to the control logic, the innermost wheel, namely the first wheel, undergoes the first compression force and is therefore relieved, counterbalancing the typical load increase on the innermost wheel due to the steering.

In addition, although not strictly necessary, the first extension force on the second wheel reduces the driver's perception of an imbalance of the motor vehicle 1 which could be caused by the sole application of the first compression force on the first wheel.

Therefore, the execution of a further control logic by the control unit ECU during the steering, in which even only or at least the first compression force is applied to the first wheel defining the innermost steerable wheel, is possible and advantageous per se, regardless of application of the first extension force on the second wheel.

In fact, during the steering and especially during a parking manoeuvre, the innermost wheel (namely the first wheel) is subject to a vertical load (or a load along the axis Z) greater than the others. This is a consequence of the kinematics of the suspension assembly 4 which increasingly compresses the innermost wheel on the road as the steering proceeds. Thus, a portion of the body 2 at the first wheel would be visually raised with respect to the first wheel.

Therefore, the first compression force compensates per se the lifting effect of the first wheel, thus giving the driver a perception of stability.

Furthermore, the outermost steered wheel (namely the second wheel) receives a lesser vertical load than the others, again due to the kinematics of the suspension assembly 4, thus being less compressed against the road. Consequently, since the motor vehicle 1 defines a hyperstatic system (body supported on four contact points), there will be a reduced and increased vertical load on the third and fourth wheel respectively.

This results in a wheel diagonal with greater vertical load and a wheel diagonal with lesser vertical load, which translates into an unpleasant effect for the driver. The above-mentioned particularly advantageous control logic therefore counters this unpleasant effect, independently of the value of the moduli of the forces FFL, FFR, FRL, FRR applied. Clearly, when the forces FFL, FFR and/or the forces FRL, FRR have the same modulus and opposite signs, the situation is even more advantageous since the movements of the body 2 are reduced and can even be annulled when the first and the second modulus are set to annul the sum of the torques around the axis X.

Preferably, the control logic could be carried out when or only when the steering angle exceeds a threshold, in particular predetermined, which could also be null according to some examples. The control unit ECU could for example determine the steering angle from the signal received from a sensor of the motor vehicle 1 configured to detect the steering angle.

Conveniently, the first modulus or more generally the modulus of the compression force applied for the innermost steerable wheel (first wheel) is increased or is more generally present to reduce a load exerted on the steering assembly 5 due to the steering.

In further detail, during the steering (especially during the parking manoeuvre), the steerable wheels undergo respective torques known as spin torques, namely the torques respectively due to the resistance forces opposing the rotations of the steerable wheels about the axis Z (i.e. opposing the steering), which translate into a load on the member 8.

The load on the member 8 or more generally on the steering assembly 5 is given by the sum of the two contributions due respectively to the spin torques on the respective steerable wheels, with the contribution of the innermost wheel being greater than that of the outermost wheel.

In fact, as previously mentioned, the innermost steered wheel undergoes the greatest compression and therefore the greatest vertical load, while the outermost steered wheel undergoes the lesser vertical load. Therefore, since the spin torques increase with the vertical load, the contribution of the innermost wheel is greater than that of the outermost wheel.

Preferably, since the spin torques increase with the steering angle, the first modulus could be expediently increasing with the steering angle, so as to contain the load on the member 8 or on the steering assembly 5.

Clearly, the expressions "innermost" and "outermost" used so far always refer to the steerable wheels with respect to the curved trajectory of the motor vehicle 1.

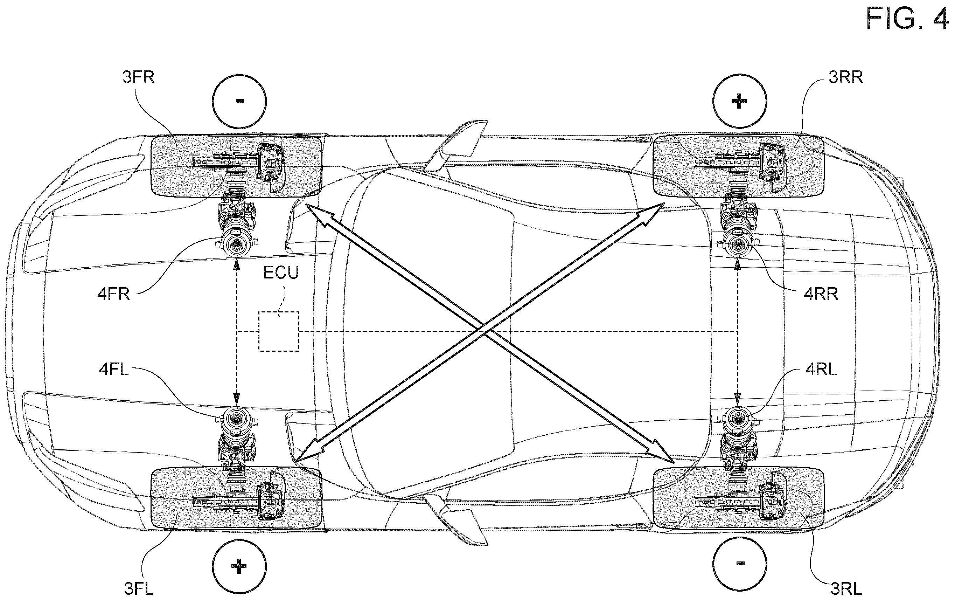

In the example of figure 4, the first wheel or the innermost wheel is the wheel 3FL, with the motor vehicle 1 steering towards the left. This is clearly not limiting: in fact, if the motor vehicle steers to the right, the first wheel or the innermost wheel would be the wheel 3FR. Here, the steerable wheels are the wheels 3FL, 3FR, but also this is not limiting. The control logic would be valid even if the steerable wheels were the wheels 3RL, 3RR, with the first wheel or innermost wheel defined by the wheel 3RL in the case of steering towards the left and by the wheel 3RR in the case of steering towards the right.

As mentioned above, the control logic is even more advantageous when the steering takes place during a parking manoeuvre of the motor vehicle 1. Therefore, the control unit ECU preferably carries out the control logic during the parking manoeuvre.

According to a second particular application of the control logic, the latter is carried out by the control unit ECU to steer the motor vehicle 1 when the steering angle is null or possibly also in general, namely also when the steering angle is not null.

In particular, each of the forces FFL, FFR, FRL, FRR can be used to vary a toe angle of the corresponding one of the wheels 3FL, 3FR, 3RL, 3RR.

In fact, the suspension assembly 4 is configured so that the toe angle of one, several, or each of the wheels 3FL, 3FR, 3RL, 3RR varies (for example linearly) with the relative shaking, in turn proportional to the corresponding one of the forces FFL, FFR, FRL, FRR, as previously mentioned.

In further detail, if the toe angle opens outwards in response to a positive shaking or compression force applied, the same toe angle will close inwards in response to a negative shaking or extension force applied. Vice versa, if the toe angle opens outward in response to a negative shaking or extension force applied, the same toe angle will close inward in response to a positive shaking or compression force applied.

Even more precisely, the higher the modulus of the shaking or the force applied, the higher the variation of the toe angle can be (opening outward or closing inward).

This very common phenomenon for the vast majority of suspension assemblies or systems is known by the term "bump steer" and depends on the design characteristics of the relative suspension assembly or system. This does not mean that the phenomenon occurs only for a few specific configurations of the suspension assembly or system; rather, there is a huge variety of suspension assemblies, also very different from one another, that present the phenomenon, although possibly with different dependencies between shaking and toe angle.

On the other hand, the suspension assemblies or systems for which the phenomenon is purposely limited or even avoided are rare, special, and specifically designed.

Therefore, the control unit ECU could cause a steering of the motor vehicle 1 by applying at least one of the forces FFL, FFR, FRL, FRR to vary the toe angle of the corresponding one of the wheels 3FL, 3FR, 3RL, 3RR, in particular on the basis of knowledge of the behaviour of the toe angle as a function of the shaking and thus of the corresponding one of the forces FFL, FFR, FRL, FRR.

Said behaviour is characteristic of the suspension assembly 4, hence known a priori or in any case determinable, for example theoretically or experimentally.

In particular, if the suspension assembly 4 is configured so that the toe angle of one of the wheels 3FL, 3FR, 3RL, 3RR opens outward in response to a force defined by one of a compression force and an extension force, the control unit ECU will apply this force to steer the motor vehicle 1 towards where the toe angle opens or towards the side of the corresponding one of the wheels 3FL, 3FR, 3RL, 3RR (this will occur in particular in response to a request or need for steering towards where the toe angle opens), while it will apply a further force defined by the other one of the compression force and the extension force to steer the motor vehicle 1 towards the opposite side (this will occur in particular in response to a request or need to steer towards the opposite side), since the toe angle will close inward in response to the application of the further force. For clarity, the expression "opens outward" indicates a movement of the toe angle according to an anti-clockwise direction for the wheels 3FL, 3RL and clockwise for the wheels 3RL, 3RR, independently of the initial value of the toe angle. Similarly, the expression "closes inward" indicates a movement of the toe angle according to a clockwise direction for the wheels 3FL, 3RL and anti-clockwise for the wheels 3RL, 3RR, independently of the initial value of the toe angle.

Alternatively or additionally, the suspension assembly 4 is configured so that a toe angle of a first wheel, for example 3FL, opens outward and closes inward in response to the application, respectively, of a first compression force and a first extension force, or a first extension force and a first compression force. In particular, the active suspension element, in this case 4FL, applies one of said forces (for example FFL) to steer the motor vehicle 1 towards one side of the first wheel or the other of said forces to steer the motor vehicle towards a side opposite the side of the first wheel, namely it is controlled to apply one of said forces (for example FFL) to steer the motor vehicle 1 towards one side of the first wheel or the other of said forces to steer the motor vehicle towards a side opposite the side of the first wheel.

If the active suspension element, for example 4FL, applies a compression force, it causes the sprung mass to move closer to the corresponding wheel, for example 3FL, according to the yaw axis Z of the motor vehicle 1, whereas if the active suspension element, for example 4FL, applies an extension force, it causes the sprung mass to move away from the corresponding wheel, in the example described here 3FL, according to the yaw axis Z.

In particular, the control unit ECU is configured to apply, for example via the active suspension element 4FL, the first compression force to steer the motor vehicle 1 towards one side of the first wheel, in this specific example 3FL, or apply the first extension force to steer the motor vehicle 1 towards a side opposite the side of the first wheel, in the specific example 3FL.

More in particular, this occurs if the toe angle opens outward in response to a positive shaking or compression force applied, namely if the toe angle of the first wheel, specifically 3FL, opens outward in response to the first compression force.

Alternatively, the control unit ECU is configured to apply, for example via the active suspension element 4FL, the first extension force to steer the motor vehicle 1 towards one side of the first wheel, in this specific example 3FL, or apply the first compression force to steer the motor vehicle 1 towards a side opposite the side of the first wheel, in the specific example 3FL. More in particular, this occurs if the toe angle opens outward in response to a negative shaking or extension force applied, namely if the toe angle of the first wheel, specifically 3FL, opens outward in response to the first extension force.

Preferably, if the control unit ECU is configured to apply, via the active suspension element, for example 4FL, a first compression force to the first wheel, in the example described 3FL, the control unit ECU is configured to apply a first extension force to a second wheel, in the example described 3FR, via the active suspension element, for example 4FR, wherein, as described above, the second wheel, in the example described 3FR, is aligned with the first wheel, in the example described 3FL, according to the pitch axis Y of the motor vehicle 1.

Alternatively, if the control unit ECU is configured to apply, via the active suspension element, for example FFL, a first extension force to the first wheel, for example 3FL, the control unit ECU is configured to apply a first compression force to the second wheel, for example 3FR, via the active suspension element, in the example described here 4FR.

In particular, in both cases, the first compression force and the first extension force have the same first modulus.

According to a possible embodiment, if the control unit ECU applies, through the active suspension element, for example 4FL, a first compression force to the first wheel, for example 3FL, the control unit ECU is further configured, in addition to applying a first extension force to the second wheel, in the example described 3FR, to apply a second extension force to a third wheel, for example 3RL, via the active suspension element, in this case 4RL, wherein the third wheel, in the example described 3RL, is aligned with the first wheel, for example 3FL, according to the roll axis X of the motor vehicle 1, and, simultaneously, apply a second compression force to a fourth wheel, for example 3RR, via the active suspension element, for example 4RR, wherein the fourth wheel, in the example described 3RR, is aligned with the second wheel, in the example described 3FR, according to the roll axis X and with the third wheel, in the example described 3RL, according to the pitch axis Y.

Even more preferably, the second compression force and the second extension force have the same second modulus and are applied simultaneously with each other and simultaneously with the first compression force and the first extension force; in particular, the first and the second modulus are such as to balance a resultant torque due to the control of the active suspension assembly 4 around the roll axis X.

According to an alternative embodiment, if the control unit ECU applies a first extension force to the first wheel, for example 3FL, the control unit ECU is configured to apply: a first compression force to a second wheel, for example 3FR, and apply a second compression force to the third wheel, for example 3RL, via the active suspension element, for example 4RL, wherein the third wheel, in the example described 3RL, is aligned with the first wheel, for example 3FL, according to the roll axis X of the motor vehicle 1, and apply a second extension force to a fourth wheel, for example 3RR, via the active suspension element, for example 4RR, wherein the fourth wheel, in the example described 3RR, is aligned with the second wheel, in the example described 3FR, according to the roll axis X and with the third wheel, for example 3RL, according to the pitch axis Y.

Preferably, in this alternative embodiment, the second compression force and the second extension force have the same second modulus and are applied simultaneously to each other and simultaneously to the first compression force and to the first extension force, wherein the first and the second modulus are such as to balance a resultant torque due to the control of the suspension assembly 4 about the roll axis X.

Preferably, the suspension assembly 4 is configured so that the toe angles of both the wheels defined by the first and the second wheel open outward or close inward with respect to the motor vehicle 1 in response to respective shaking movements (namely forces applied to the first and the second wheel respectively) with the same sign, i.e. two extension forces and two compression forces.

In this way, if the toe angle of the first wheel, for example 3FL, opens outward in response to the first compression force, the toe angle of the second wheel, for example 3FR, will close inward in response to the first extension force, so that the motor vehicle 1 steers towards the side of the first wheel (first alternative situation). Alternatively, if the toe angle of the first wheel, for example 3FL, closes inward in response to the first compression force, the toe angle of the second wheel, for example 3FR, will open outward in response to the first extension force, so that the motor vehicle 1 steers towards the side of the second wheel, in the example described 3FR (second alternative situation).

More preferably, the suspension assembly 4 is further configured so that the toe angles of both the wheels defined by the third and the fourth wheel, for example 3RL and 3RR, close inward and open outward with respect to the motor vehicle 1 respectively in response to shaking movements (namely forces respectively applied to the third and the fourth wheel) which would cause the toe angles of the first wheel and the second wheel to open inward and close outward.

In this way, in the above-mentioned first alternative situation, the toe angle of the third wheel, for example 3RL, opens outward in response to the second extension force (since it would close inward in response to a compression force), while the toe angle of the fourth wheel, for example 3RR, closes inward in response to the second compression force (since it would open outward in response to an extension force). In the above-mentioned second alternative situation, the toe angle of the third wheel, for example 3RL, closes inward in response to the second extension force (since it would open outward in response to a compression force), while the toe angle of the fourth wheel, for example 3RR, opens outward in response to the second compression force (since it would close inward in response to an extension force).

In particular, the control logic described above is particularly advantageous as the control unit ECU requires the first modulus (namely, the same modulus as the first compression force and the first extension force) and the second modulus (namely, the same modulus as the second compression force and the second extension force) to balance or annul the resultant torque about the axis X due to the action of the active suspension assembly 4 or more precisely to the (more precisely sole) forces FFL, FFR, FRL, FRR exerted by the active suspension elements 4FL, 4FR, 4RL, 4RR.

In this way, the sprung mass is in a state of static equilibrium. Therefore, the driver does not perceive any imbalances in the sprung mass, regardless of the manoeuvres which the driver performs with the motor vehicle 1.

In other words, the resultant torque about the axis X due only to the action of the active suspension assembly 4 or more precisely to the forces FFL, FFR, FRL, FRR exerted, in particular directly, by the active suspension elements 4FL, 4FR, 4RL, 4RR, is balanced or annulled, and not, for example, the resultant torque about the axis X due to the action of other forces not exerted by the active suspension elements 4FL, 4FR, 4RL, 4RR or forces external to the vehicle to which the latter is subject during movement, for example the centrifugal force or the aerodynamic resistance force.

Advantageously, in this way, the driver does not perceive any disturbance due to the operation of the active suspension assembly 4, in particular due to the application of the compression and extension forces FFL, FFR, FRL, FRR according to the control logic described above.

Again in other words, the resultant torque about the axis X annulled by the control strategy described above originates exclusively from the actions of (namely, the forces exerted by) the active suspension assembly 4, in particular excluding the effects of the forces external to said active suspension assembly 4 or not exerted by the active suspension assembly 4.

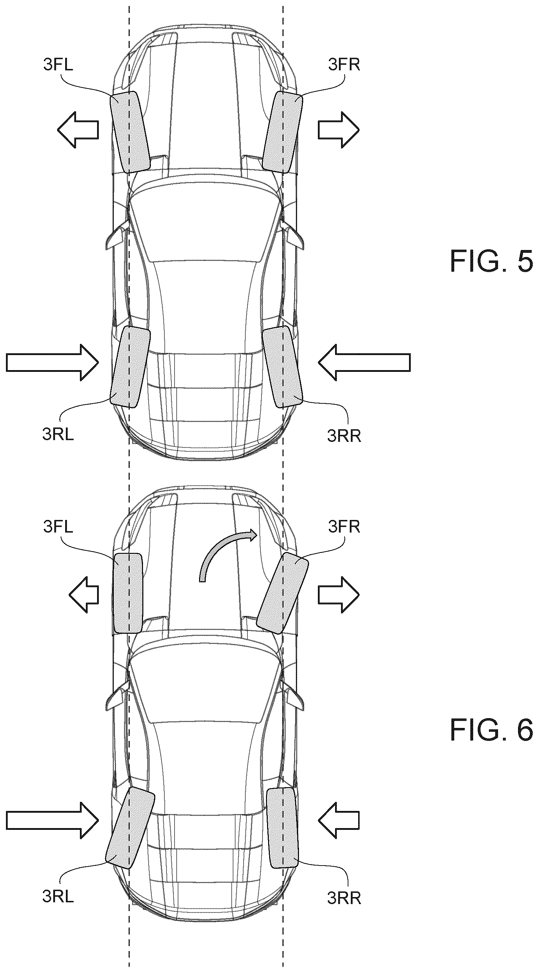

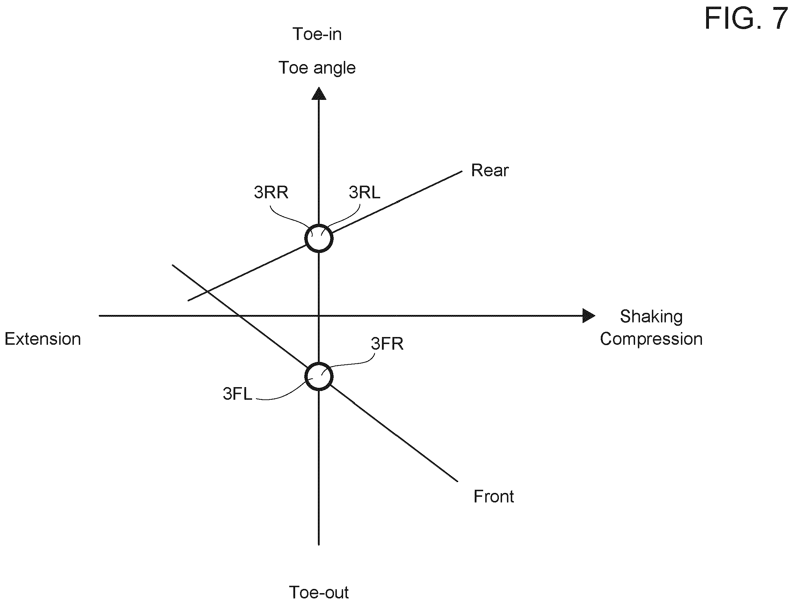

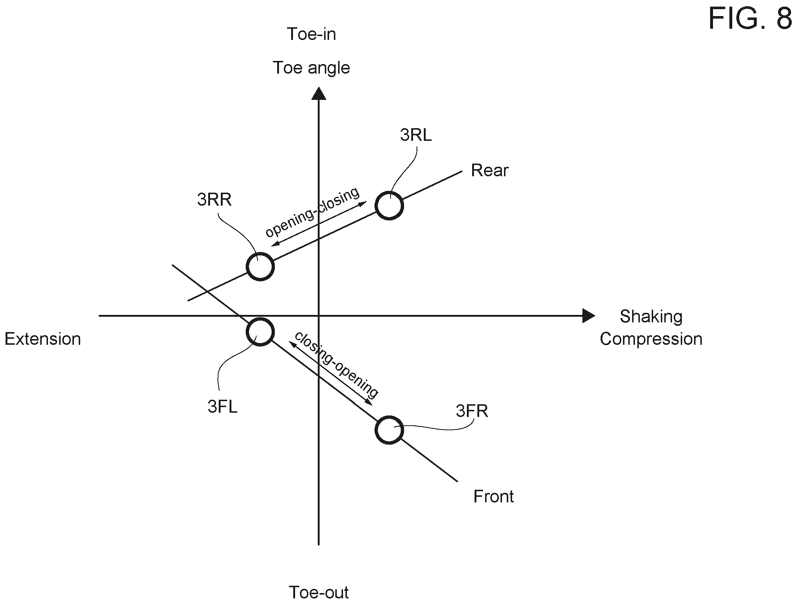

Figures 7, 8 refer specifically to the particular example of the motor vehicle 1 and the suspension assembly 4. Figures 7, 8 are graphs that show the toe angle (Y axis) as a function of the shaking (X axis) for the wheels 3FL, 3FR, 3RL, 3RR. In figure 7, the forces FFL, FFR, FRL, FRR are null, hence the shaking is null; in figure 8, the particularly advantageous control logic is applied. Therefore, figures 7, 8 refer to the operating conditions of figures 5, 6, respectively.

According to the conventions used in figures 7, 8, the toe angle is positive inward and negative outward, namely it is positive and negative respectively when the direction orthogonal to the wheel axle and the axis Z points laterally inward and outward with respect to the motor vehicle 1 in front of the wheel axle. Therefore, the toe angle increases when it closes inward and decreases when it opens outward.

Here, in static conditions or when the forces FFL, FFR, FRL, FRR are null (figure 7), the first and the second wheel have a toe-out and more in particular are the wheels 3FL, 3FR (the front wheels). Furthermore, in particular, the third and the fourth wheel have a toe-in and more in particular are the wheels 3RL, 3RR (the rear wheels). For clarity, by toe-out we mean that the toe angles are both open outward (negative), while by toe-in we mean that the toe angles are both closed inward (positive).

The suspension assembly 4 is configured specifically so that the toe angles of the first and second wheel (here the front wheels) open outward the more the relative shaking movements (or the compression forces applied to them) increase and are positive with increasing modulus (as shown in figure 8). Therefore, the toe angles of the first and the second wheel close inward the more the relative shaking movements (or the extension forces applied to them) decrease or are negative with increasing modulus.

Independently, the suspension assembly 4 is configured so that the toe angles of the third and the fourth wheel (here the rear wheels) open outward the more the shaking movements (or the extension forces applied to them) of the third and the fourth wheel decrease or are negative with increasing modulus (as shown in figure 8). Therefore, the toe angles of the third and the fourth wheel close inward the more the relative shaking movements (or the relative compression forces applied) increase or are positive with increasing modulus.

With this configuration, the motor vehicle 1 steers towards the side of the first wheel with the execution of the particularly advantageous control logic when the steering angle is null or possibly also in general, namely when the steering angle is not null.

In the example of figures 5-8, the first wheel is the wheel 3FR, hence the motor vehicle 1 steers to the right.

Since the forces applied by or via the active suspension elements 4FL, 4FR are opposed to each other, like those applied by or via the active suspension elements 4RL, 4RR, the shaking of the wheel 3FL will be opposed to that of the wheel 3FR, likewise the shaking of the wheel 3RL will be opposed to that of the wheel 3RR.

As can be seen in figure 8, the first compression force determines the shaking (positive) which causes the toe angle of the first wheel (in the example the wheel 3FR) to open outward. On the other hand, the first extension force determines the opposite shaking (negative) which causes the toe angle of the second wheel (in the example the wheel 3FL) to close inward.

Similarly, the second compression force determines the shaking (positive) that causes the toe angle of the fourth wheel (in the example the wheel 3RL) to close inward. On the other hand, the second extension force determines the opposite shaking (negative) which causes the toe angle of the third wheel (in the example the wheel 3RR) to open outward.

Therefore, even if the steering angle is null, the motor vehicle 1 steers towards the side of the first wheel. For example, this evidently applies even if the steering angle were not null.

Clearly, in this example, the null (or in general non null) steering angle is the one set via the steering assembly 5 (the real or effective steering angle during the steering caused by the control logic will be different from zero, but said steering angle is not imparted by the driver via the inlet device 6).

The control unit ECU carries out control methods to control the motor vehicle 1. Each of the functions described of the control unit ECU can be part of a control method according to the invention.

The control unit ECU thus defines a processing means comprising instructions to cause the motor vehicle 1 to follow the control method.

From the above, the advantages of the motor vehicle 1 and the method according to the invention are evident.

In fact, via an effective distribution of the forces 3FL, 3FR, 3RL, 3RR on the wheels 3FL, 3FR, 3RL, 3RR it is possible for example to steer the motor vehicle 1 in a non-conventional manner, without the driver perceiving dynamic imbalances of the body 2.

Furthermore, the effective distribution of the forces 3FL, 3FR, 3RL, 3RR can be used also to reduce or avoid vertical movements of the body 2 during steering, and to lower the operating load on the steering assembly 5.

Lastly it is clear that modifications and variations that do not depart from the protective scope defined by the claims can be made to the motor vehicle and to the method according to the invention.

**Claims**

1. A control method for controlling a motor vehicle (1) comprising a sprung mass with a body (2), an unsprung mass comprising a plurality of wheels (3FL, 3FR, 3RL, 3RR) for allowing a progress of the motor vehicle (1) on a road, an active suspension assembly (4) configured to suspend the sprung mass relative to the unsprung mass and comprising active suspension elements (4FL, 4RF, 4RL, 4RR) configured to apply respective forces (FFL, FFR, FRL, FRR) to the wheels (3FL, 3FR, 3RL, 3RR) of the motor vehicle (1), wherein each of said forces (FFL, FFR, FRL, FRR) is a compression force to bring the sprung mass closer to the corresponding one of the wheels (3FL, 3FR, 3RL, 3RR) according to a yaw axis (Z) of the motor vehicle (1) or an extension force to move the sprung mass away from the corresponding one of the wheels (3FL, 3FR, 3RL, 3RR) according to the yaw axis (Z), the method comprising a control of the active suspension assembly (4) for

   - applying a first compression force of said forces to a first wheel (3FL) of said wheels (3FL, 3FR, 3RL, 3RR) via a first element (4FL) of said active suspension elements (4FL, 4RF, 4RL, 4RR), and simultaneously
   - applying a first extension force of said forces to a second wheel (3FR) of said wheels (3FL, 3FR, 3RL, 3RR) via a second element (4FR) of said active suspension elements (4FL, 4RF, 4RL, 4RR), the second wheel (3FR) being aligned with the first wheel (3FL) according to a pitch axis (Y) of the motor vehicle (1).

2. The method according to claim 1, wherein the first compression force and the first extension force have a same first modulus.

3. The method according to claim 2, wherein the control of the active suspension assembly (4) further comprises

   - applying a second extension force of said forces to a third wheel (3RL) of said wheels (3FL, 3FR, 3RL, 3RR) via a third element (4RL) of said active suspension elements (4FL, 4RF, 4RL, 4RR), the third wheel (3RL) being aligned with the first wheel (3FL) according to a roll axis (X) of the motor vehicle (1), and
   - applying a second compression force of said forces to a fourth wheel (3RR) of said wheels (3FL, 3FR, 3RL, 3RR) via a fourth element (4RR) of said active suspension elements (4FL, 4RF, 4RL, 4RR), the fourth wheel (3RR) being aligned with the second wheel (3FR) according to the roll axis (X) and the third wheel (3RL) according to the pitch axis (Y),

   wherein the second compression force and the second extension force have a same second modulus and are applied simultaneously to each other and simultaneously to the first compression force and the first extension force, the first and second modulus being such as to balance a resultant torque due to the control of the active suspension assembly (4) about the roll axis (X).

**4.** The method according to any one of the preceding claims, wherein the control of the active suspension assembly (4) is performed during a steering of the motor vehicle (1) wherein the first and second wheels are steered, the first wheel being innermost of the second wheel with respect to a curved trajectory of the steering.

**5.** The method according to claim 4, wherein the control is performed when a steering angle of the motor vehicle (1) exceeds a predetermined threshold.

**6.** The method according to claim 4 or 5, wherein the first module is increased to decrease a load exerted due to steering on a steering assembly of the motor vehicle (1), the steering assembly being operable by a driver to carry out the steering.

**7.** The method according to claim 6, wherein the first module is increased with a steering angle of the motor vehicle (1).

**8.** The method according to any one of claims 1 to 3, wherein the active suspension assembly (4) is configured such that a first toe angle of the first wheel (3FL) opens outwardly in response to the first compression force and a second toe angle of the second wheel (3FR) closes inwardly in response to the first extension force, the control of the active suspension assembly (4) being performed with a null steering angle of the motor vehicle (1) to steer the motor vehicle (1) toward a side of the first wheel.

**9.** The method according to claim 8, when dependent on claim 3, wherein the active suspension assembly (4) is further configured such that a third toe angle of the third wheel (3RL) opens outwardly in response to the second extension force and a fourth toe angle of the fourth wheel (3RR) closes inwardly in response to the second compression force.

**10.** A control method for controlling a motor vehicle (1) comprising a sprung mass with a body (2), an unsprung mass comprising at least a first wheel and a second wheel (3FL, 3FR) aligned with each other according to a pitch axis (Y) of the motor vehicle for allowing a progress of the motor vehicle (1) on a road, an active suspension assembly (4) configured to suspend the sprung mass relative to the unsprung mass and comprising at least one active suspension element (4FL) configured to apply a compression force (FFL) to the first wheel (3FL) to bring the sprung mass closer to the first wheel (3FL) according to a yaw axis (Z) of the motor vehicle (1), the method comprising a steering of the motor vehicle (1) wherein the first and second wheels (3FL, 3FR) are steered, the first wheel (3FL) being innermost of the second wheel (3FR) with respect to a curved trajectory of the steering, and a control of the active suspension assembly (4) to apply the first compression force (FFL) to the first wheel (3FL) via the active suspension element (4FL, 4RF, 4RL, 4RR) during the steering.

**11.** A control method for controlling a motor vehicle (1) comprising a sprung mass with a body (2), an unsprung mass comprising at least one first wheel (3FL) for allowing a progress of the motor vehicle (1) on a road, an active suspension assembly (4) configured to suspend the sprung mass relative to the unsprung mass and comprising at least one active suspension element (4FL) configured to apply forces (FFL) to the first wheel (3FL), wherein each of said forces (FFL, FFR, FRL, FRR) is a compression force to bring the sprung mass closer to the corresponding one of the wheels (3FL, 3FR, 3RL, 3RR) according to a yaw axis (Z) of the motor vehicle (1) or an extension force to move the sprung mass away from the corresponding one of the wheels (3FL, 3FR, 3RL, 3RR) according to the yaw axis (Z), wherein the active suspension assembly (4) is configured such that a toe angle of the first wheel respectively opens outward and closes inward in response to the application of a first force and a second force of said forces via the active suspension element (4FL), the first and second forces being defined by one and the other of a first compression force and a first extension force, respectively, the method including a control of the active suspension assembly (4) to apply the first force to steer the motor vehicle (1) to a side of the first wheel or apply the second force to steer the motor vehicle (1) toward a side opposite to the side of the first wheel (3FL).

**12.** The method according to claim 11, wherein the first wheel (3FL) forms part of a plurality of wheels (3FL, 3FR, 3RL, 3RR) of the unsprung mass, and wherein the active suspension element (4FL) is a first element of a plurality of active suspension elements (4FL, 4RF, 4RL, 4RR) of the active suspension assembly (4) configured to apply respective further forces (FFL, FFR, FRL, FRR) to the wheels (3FL, 3FR, 3RL, 3RR), wherein each of said forces (FFL, FFR, FRL, FRR) is a compression force to bring the suspended mass closer to the corresponding one of the wheels (3FL, 3FR, 3RL, 3RR) according to a yaw axis (Z) of the motor vehicle (1) or an extension force to move the suspended mass away from the corresponding one of the wheels (3FL, 3FR, 3RL, 3RR) according to the yaw axis (Z), wherein the control of the active suspension assembly (4) is to apply a third force defined by the first force or by the second force and furthermore to simultaneously

- apply a first extension force of said forces to a second wheel (3FR) of said wheels (3FL, 3FR, 3RL, 3RR) via a second element (4FR) of said active suspension elements (4FL, 4RF, 4RL, 4RR), the second wheel (3FR) being aligned with the first wheel (3FL) according to a pitch axis (Y) of the motor vehicle (1), when the third force is defined by the first compression force, or to

- apply a first compression force of said forces to a second wheel (3FR) of said wheels (3FL, 3FR, 3RL, 3RR) via a second element (4FR) of said active suspension elements (4FL, 4RF, 4RL, 4RR), the second wheel (3FR) being aligned with the first wheel (3FL) according to a pitch axis (Y) of the motor vehicle (1), when the third force is defined by the first extension force, wherein the first compression force and the first extension force have the same first modulus.

13. The method according to claim 12, wherein the third force is defined by the first compression force, and wherein the control of the active suspension assembly (4) further comprises

- applying a second extension force of said forces to a third wheel (3RL) of said wheels (3FL, 3FR, 3RL, 3RR) via a third element (4RL) of said active suspension elements (4FL, 4RF, 4RL, 4RR), the third wheel (3RL) being aligned with the first wheel (3FL) according to a roll axis (X) of the motor vehicle (1), and
- applying a second compression force of said forces to a fourth wheel (3RR) of said wheels (3FL, 3FR, 3RL, 3RR) via a fourth element (4RR) of said active suspension elements (4FL, 4RF, 4RL, 4RR), the fourth wheel (3RR) being aligned with the second wheel (3FR) according to the roll axis (X) and with the third wheel (3RL) according to the pitch axis (Y),

wherein the second compression force and the second extension force have the same second modulus and are applied simultaneously to each other and simultaneously to the first compression force and the first extension force, the first and the second modulus being such as to balance a resultant torque due to the control of the active suspension assembly (4) about the roll axis (X).

14. The method according to claim 12, wherein the third force is defined by the first extension force, and wherein the control of the active suspension assembly (4) further comprises

- applying a second compression force of said forces to a third wheel (3RL) of said wheels (3FL, 3FR, 3RL, 3RR) via a third element (4RL) of said active suspension elements (4FL, 4RF, 4RL, 4RR), the third wheel (3RL) being aligned with the first wheel (3FL) according to a roll axis (X) of the motor vehicle (1), and
- applying a second extension force of said forces to a fourth wheel (3RR) of said wheels (3FL, 3FR, 3RL, 3RR) via a fourth element (4RR) of said active suspension elements (4FL, 4RF, 4RL, 4RR), the fourth wheel (3RR) being aligned with the second wheel (3FR) according to the roll axis (X) and with the third wheel (3RL) according to the pitch axis (Y), wherein the second compression force and the second extension force have the same second modulus and are applied simultaneously to each other and simultaneously to the first compression force and to the first extension force, the first and the second modulus being such as to balance a resultant torque due to the control of the active suspension assembly (4) about the roll axis (X).

15. Motor vehicle (1) comprising:

- a sprung mass with a body (2),
- an unsprung mass comprising a plurality of wheels (3FL, 3FR, 3RL, 3RR) for allowing a progress of the motor vehicle (1) on a road,
- an active suspension assembly (4) configured to suspend the sprung mass relative to the unsprung mass and comprising active suspension elements (4FL, 4RF, 4RL, 4RR) configured to apply respective forces (FFL, FFR, FRL, FRR) to the wheels (3FL, 3FR, 3RL, 3RR) of the motor vehicle (1), wherein each of said forces (FFL, FFR, FRL, FRR) is a compression force to bring the sprung mass closer to the corresponding one of the wheels (3FL, 3FR, 3RL, 3RR) according to a yaw axis (Z) of the motor vehicle (1) or an extension force to move the sprung mass away from the corresponding one of the wheels (3FL, 3FR, 3RL, 3RR) according to the yaw axis (Z),
- a steering assembly operable by a driver to carry out steering, and
- a control unit (ECU) configured to perform the method according to any of the preceding claims,

wherein the active suspension assembly (4) is preferably configured such that a toe angle of a first wheel of said wheels (3FL, 3FR, 3RL, 3RR) respectively opens outwardly and closes inwardly in response to the application of a first force and a second force of said forces via a first element of the active suspension elements (4FL, 4RF, 4RL, 4RR), the first and second forces being defined by one and the other of a first compression force and a first extension force respectively.

FIG. 1

FIG. 2

# FIG. 3

FIG. 4

3FR    (-)    (+)    3RR

4FR    ECU    4RR

4FL    4RL

3FL    (+)    (-)    3RL

EP 4 667 248 A1

FIG. 5

FIG. 6

FIG. 7

FIG. 8

EP 4 667 248 A1

Europäisches
Patentamt

European
Patent Office

Office européen
des brevets

## EUROPEAN SEARCH REPORT

**Application Number**

EP 25 18 1696

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 573 605 B2 (DI MARIA PHILLIP [AU]) 5 November 2013 (2013-11-05) * column 3, lines 54-59; figures * * column 4, lines 45-54 * | 1-15 | INV. B60G17/016 B60G17/08 |
| X | US 2022/105769 A1 (CHETTY ADITYA CHANDRASHEKHAR [US] ET AL) 7 April 2022 (2022-04-07) * paragraphs [0028] - [0030], [0041]; figures * | 1-15 | |
| X | WO 2008/141387 A1 (UNIV SYDNEY TECH [AU]; ZHANG NONG [AU]) 27 November 2008 (2008-11-27) * page 30, line 34 - page 31, line 13; figures * | 1-15 | |
| A | US 2017/113506 A1 (TSENG ERIC HONGTEI [US] ET AL) 27 April 2017 (2017-04-27) * paragraphs [0039], [0052], [0058] - [0060]; figures * | 1-15 | |

**TECHNICAL FIELDS SEARCHED (IPC)**

B60G

The present search report has been drawn up for all claims

| Place of search | Date of completion of the search | Examiner |
|---|---|---|
| The Hague | 15 October 2025 | Cavallo, Frédéric |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

    .......................................................................

& : member of the same patent family, corresponding
   document

EPO FORM 1503 03.82 (P4C01)

## ANNEX TO THE EUROPEAN SEARCH REPORT
## ON EUROPEAN PATENT APPLICATION NO.

EP 25 18 1696

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2025

| Patent document cited in search report | | Publication date | Patent family member(s) | | Publication date |
|---|---|---|---|---|---|
| US 8573605 | B2 | 05-11-2013 | AU | 2010213371 A1 | 22-09-2011 |
| | | | EP | 2396185 A1 | 21-12-2011 |
| | | | JP | 2012517925 A | 09-08-2012 |
| | | | KR | 20110131211 A | 06-12-2011 |
| | | | US | 2012119454 A1 | 17-05-2012 |
| | | | WO | 2010091481 A1 | 19-08-2010 |
| US 2022105769 | A1 | 07-04-2022 | EP | 3911527 A1 | 24-11-2021 |
| | | | US | 2022105769 A1 | 07-04-2022 |
| | | | US | 2025128561 A1 | 24-04-2025 |
| | | | WO | 2020150522 A1 | 23-07-2020 |
| WO 2008141387 | A1 | 27-11-2008 | CN | 101765727 A | 30-06-2010 |
| | | | WO | 2008141387 A1 | 27-11-2008 |
| US 2017113506 | A1 | 27-04-2017 | NONE | | |

EPO FORM P0459

For more details about this annex : see Official Journal of the European Patent Office, No. 12/82

**EP 4 667 248 A1**

**Patent documents cited in the description**

- IT 102024000014071